# EUROPÄISCHE PATENTSCHRIFT

(11) **EP 2 963 319 B1**
(45) Veröffentlichungstag und Bekanntmachung des Hinweises auf die Patenterteilung: **30.01.2019**
(21) Anmeldenummer: 15172251.9
(22) Anmeldetag: 16.06.2015
(51) Int. Cl.: F16J 15/3232, F16J 15/3236

(54) **DICHTRING**
GASKET
BAGUE D'ÉTANCHÉITÉ

(30) Priorität: 03.07.2014 DE 102014009882
(43) Veröffentlichungstag der Anmeldung: 06.01.2016
(73) Patentinhaber: Carl Freudenberg KG, 69469 Weinheim (DE)
(72) Erfinder: Näser, Hartmut, 34613 Schwalmstadt (DE); Fietz, Roland, 35279 Neustadt-Momberg (DE)

(56) Entgegenhaltungen:
- EP-A1- 2 672 133
- WO-A1-2010/043249
- DE-A1-102009 006 955
- FR-A1- 2 002 612
- FR-A1- 2 529 286

## Beschreibung

### Technisches Gebiet

Die Erfindung betrifft einen Dichtring, der - im Querschnitt betrachtet - im Wesentlichen Y-förmig ausgebildet ist und eine erste und eine zweite dynamisch beanspruchte Dichtlippe umfasst, die an einem gemeinsamen Tragkörper festgelegt sind, wobei die Dichtlippen im herstellungsbedingten Zustand des Dichtrings einen ersten Winkel miteinander begrenzen, der höchstens 60° beträgt.

### Stand der Technik

Ein solcher Dichtring ist aus der WO 2010/043249 A1 bekannt. In einem Ausführungsbeispiel besteht der Dichtring aus einem thermoplastischen Urethan mit einer Härte Shore A ≥ 90.
Zur Herstellung des Dichtrings wird zunächst ein Band hergestellt, das in der gewünschten Länge abgelängt wird, wobei anschließend die Enden des abgelängten Bands miteinander zum Dichtring verschweißt werden.

Ein weiterer Dichtring gemäß Oberbegriff von Anspruch 1 ist aus der EP 2 672 133 A1 bekannt. Der vorbekannte Dichtring wird zur Abdichtung von Lagern benutzt, die in Windkraftanlagen zur Anwendung gelangen. Der Dichtring ist einstückig ineinander übergehend und materialeinheitlich ausgebildet.

Ein weiterer Dichtring ist aus der DE 20 2008 017 339 U1 bekannt. Der vorbekannte Dichtring besteht aus einem Elastomermaterial und umfasst neben den dynamisch beanspruchten Dichtlippen einen statischen Dichtbereich. Eine der dynamisch beanspruchten Dichtlippen ist mit einem separat erzeugten Federelement versehen, das durch ein metallisches Band gebildet ist. Das Federelement ist U- oder V-förmig und in axialer Richtung offen ausgebildet, wobei die Federkraft des Federelements eine Anpresskraft auf die zugehörige Dichtlippe ausübt, die 0,3 bis 0,6 N/mm Dichtlippenlänge beträgt.
Das Federelement ist erforderlich, um die notwendige Vorspannung der damit versehenen, dynamisch beanspruchten Dichtlippe auf der abzudichtenden Oberfläche des abzudichtenden Maschinenelements aufzubringen und somit die erforderliche Dichtheit zu erreichen.

Durch das Federelement wird die Herstellung des vorbekannten Dichtrings aufwendig und teuer.
Verwendung findet der vorbekannte Dichtring zur Abdichtung von Lagern in Windenergieanlagen.

Aus der DE 10 2010 045 671 A1 ist ein weiterer Dichtring bekannt, der zwei dynamisch beanspruchte Dichtlippen umfasst, die beide gleichsinnig axial in Richtung des abzudichtenden Raums vorgewölbt sind. Der Dichtring ist einstückig und materialeinheitlich ausgebildet. Eine der dynamisch beanspruchten Dichtlippen berührt eine sich in radialer Richtung erstreckende erste Hinterschneidung eines abzudichtenden Maschinenelements dichtend, und eine der dynamisch beanspruchten Dichtlippen berührt eine abzudichtende Oberfläche, die sich in radialer Richtung außen an die Hinterschneidung anschließt.

### Darstellung der Erfindung

Der Erfindung liegt die Aufgabe zugrunde, einen Dichtring der eingangs genannten Art derart weiterzuentwickeln, dass Reibmomente während der bestimmungsgemäßen Verwendung des Dichtrings reduziert sind und der Dichtring ausgezeichnete Not- und Trockenlaufeigenschaften aufweist, dass er einen teilearmen Aufbau aufweist, einfach und kostengünstig herstellbar ist und trotzdem gute Gebrauchseigenschaften während einer langen Gebrauchsdauer aufweist, insbesondere eine ausreichend große Vorspannung an der abzudichtenden Oberfläche eines abzudichtenden Maschinenelements, und somit die notwendige Dichtheit bewirkt.

Diese Aufgabe wird erfindungsgemäß durch einen Dichtring gemäß Anspruch 1 gelöst. Auf vorteilhafte Ausgestaltungen nehmen die auf Anspruch 1 rückbezogenen Ansprüche Bezug.

Zur Lösung der Aufgabe ist ein Dichtring vorgesehen, der materialeinheitlich aus einem PU-Werkstoff besteht, umfassend eine PU-Matrix, in der reibungsreduzierende Zuschlagstoffe eingebettet sind.
Dabei ist von Vorteil, dass PU-Werkstoffe eine sehr gute Verschleißfestigkeit aufweisen, einen niedrigen Reibungskoeffizient, einen weit einstellbaren Härte- und Modulbereich, eine große Zugfestigkeit und Bruchdehnung haben, in einem weiten Temperaturbereich Mineralöl beständig sind und eine ausgezeichnete Ozon- und Oxydationsbeständigkeit aufweisen. Außerdem haben PU- Werkstoffe ein hohes Dämpfungsverhalten und sind sehr beständig gegenüber Rissbildung und Risswachstum, was insbesondere dann von hervorzuhebendem Vorteil ist, wenn die Vorspannung der Dichtlippen an die jeweils abzudichtende Oberfläche ausschließlich durch den Werkstoff, aus dem die Dichtlippen bestehen, bewirkt wird. Außerdem haben PU-Werkstoffe gute Hydrolysefestigkeiten. Aus all diesen genannten Vorteilen ergibt sich insgesamt eine hohe Standzeit des beanspruchten Dichtrings während seiner bestimmungsgemäßen Verwendung, wobei die Gebrauchseigenschaften des Dichtrings während der gesamten Gebrauchsdauer praktisch unverändert sind.

Polyurethan-Werkstoffe sind üblicherweise härter als NBR- / EPDM-Werkstoffe. Dichtlippen aus NBR- / EPDM-Werkstoffen sind nicht geeignet, ohne zusätzliche Federkörper, die für eine ausreichende Vorspannung der Dichtlippen an der abzudichtenden Oberfläche sorgen, betrieben zu werden.

Durch die vergleichsweise größere Härte des PU-Werkstoffs werden in Verbindung mit dem engen ersten Winkel zwischen den beiden Dichtlippen auch ohne Federelemente gute Gebrauchseigenschaften des Dichtrings erreicht.

Ein weiterer Vorteil von PU-Werkstoffen besteht darin, diese Werkstoffe verschweißbar sind. Dadurch kann der Dichtring in einem Extrusionsverfahren hergestellt, passend abgelängt und anschließend im Bereich seiner Enden zu Ringen verschweißt werden. Schweißnähte von PU-Werkstoffen haben eine 100%-Leistungsfähigkeit; das bedeutet, dass sich die Schweißnaht bei PU-Werkstoffen bezüglich Haltbarkeit und Gebrauchseigenschaften nicht von Bereichen unterscheidet, die benachbart zur Schweißnaht angeordnet sind. NBR- / EPDM-Werkstoffe können zwar geklebt oder stoßvulkanisiert werden, die Stoßstelle ist jedoch eine Schwachstelle, die sich im Laufe der Gebrauchsdauer des Dichtrings lösen kann.

Der PU-Werkstoff umfasst eine PU-Matrix, in der reibungsreduzierende Zuschlagstoffe eingebettet sind.
Bei solchen Zuschlagstoffen kann es sich um PTFE- (Polytetrafluorethylen) und /oder UHMWPE (ultrahochmolekulargewichtiges Polyethylen)- und / oder Graphit-Werkstoffe handeln. Durch die Zuschlagstoffe werden Reibmomente reduziert, und ein solcher Dichtring weist ausgezeichnete Not- und Trockenlaufeigenschaften auf.

Die hier beispielhaft aufgeführten Stoffe können jeweils alleine oder in Kombination eingesetzt werden. Die Vorteile von graphit- und PTFE- basierten Zuschlagstoffen kommen in Grenz- und Trockenreibungszuständen zum Tragen. Einbettungen auf Basis von UHMWPE bewirken vorzugsweise eine Verbesserung der Benetzungsfähigkeit mit öligen oder pastösen Schmierstoffen und verbessern damit die Betriebsbedingungen für Anwendungen, bei denen die Reibungspartner durch einen Schmierfilm getrennt sein sollen.

Der PU-Werkstoff kann bevorzugt eine Härte Shore A von 80 bis 95 aufweisen. Eine solche Härte ist vor Vorteil, wenn sich die Dichtlippen allein werkstoffbedingt, also ohne zusätzliche Federelemente, mit ausreichender elastischer Vorspannung dichtend an die abzudichtende Oberfläche anlegen sollen.

Durch einen solchen Dichtring können zum Beispiel rotierende, schwenkende oder schraubenartig bewegte Wellen, Stangen, Spindeln oder Lager abgedichtet werden. Die Abdichtung erfolgt gegen abzudichtende Medien, wie zum Beispiel Öl, Fett, Wasser oder aber auch zum Schutz gegen Umwelteinflüsse wie Schmutz, Staub, Salz und / oder Feuchtigkeit. Durch den vergleichsweise kleinen ersten Winkel zwischen den beiden Dichtlippen im herstellungsbedingten Zustand des Dichtrings ergibt sich während der bestimmungsgemäßen Verwendung des Dichtrings, nämlich dann, wenn die beiden Dichtlippen axial in entgegengesetzter Richtung aufgespreizt an einer abzudichtenden Oberfläche eines abzudichtenden Maschinenelements dichtend anliegen, eine ausreichend große Vorspannung der Dichtlippen an der abzudichtenden Oberfläche und somit eine gute Dichtheit. Durch den herstellungsbedingt engen ersten Winkel ist die Verwendung zusätzlicher Federelemente für eine ausreichend große Vorspannung der Dichtlippen auf der Oberfläche des abzudichtenden Maschinenelements entbehrlich.
Trotz der guten Gebrauchseigenschaften ist der erfindungsgemäße Dichtring besonders teilearm sowie einfach und kostengünstig herstellbar.

Weiter bevorzugt beträgt der erste Winkel höchstens 45°. Durch einen kleinen ersten Winkel kann die elastische Vorspannung, mit der die Dichtlippen die abzudichtende Oberfläche dichtend berühren, weiter erhöht werden.

Das schlanke, im Wesentlichen Y-förmige Profil des Dichtrings ist der Grund dafür, dass auch pulsierende Schwankungen im Radialspalt eines Einbauraums, in dem der Dichtring angeordnet ist, dauerhaft überbrückt werden können.

Der erste Winkel beträgt sinnvollerweise zumindest 5°, weiter bevorzugt zumindest 10°. Die Größe des ersten Winkels ist dabei so ausgelegt, dass einerseits eine ausreichend große Vorspannung der Dichtlippen auf die abzudichtende Oberfläche gegeben ist und außerdem - zum Beispiel durch eine Überdehnung - keine unerwünscht großen mechanischen Beanspruchungen der Dichtlippen während der bestimmungsgemäßen Verwendung auftreten, die zu einer eingeschränkten Gebrauchsdauer des Dichtrings führen könnten.

Gemäß einer vorteilhaften Ausgestaltung kann es vorgesehen sein, dass der Tragkörper axial mittig eine gedachte Radialebene aufweist und dass die erste und die zweite Dichtlippe mit der Radialebene einen zweiten und dritten Winkel begrenzen, die jeweils höchstens 45°, weiter bevorzugt jeweils höchstens 25°, betragen. Durch eine derartige Ausgestaltung wird erreicht, dass beide Dichtlippen jeweils herstellungsbedingt ausreichend steil, bezogen auf eine abzudichtende Fläche eines abzudichtenden Maschinenelements, ausgebildet sind.
Der zweite und dritte Winkel können im Wesentlichen gleich groß und im Wesentlichen spiegelsymmetrisch zu der gedachten Radialebene angeordnet sein.

Die Dichtlippen weisen jeweils eine Dichtlippenlänge auf und der Tragkörper eine axiale Breite, wobei das Verhältnis der jeweiligen Dichtlippenlänge zur Breite bevorzugt 1,25 bis 2 beträgt.

Ein solches Verhältnis hat sich für die Verwendung federlos ausgebildeter Dichtlippen im Hinblick auf eine gleichbleibend große Vorspannung während einer langen Gebrauchsdauer als vorteilhaft bewährt. Durch ein solches Verhältnis ist sichergestellt, dass die Dichtlippen nicht zu filigran ausgebildet sind und dadurch stets die notwendige Vorspannung auf der abzudichtenden Oberfläche erhalten bleibt. Andererseits wird durch dieses Verhältnis erreicht, dass die Dichtlippen ausreichend elastisch nachgiebig sind, dadurch gut abdichten und auch die zuvor bereits beschriebenen, pulsierenden Schwankungen im Radialspalt des Einbauraums dauerhaft überbrücken können.

Die Dichtlippen können jeweils eine Dichtkante und von ihrer jeweiligen Dichtkante zum Tragkörper eine stetig zunehmende Dicke aufweisen. Durch eine solche Ausgestaltung ergibt sich von der Dichtkante bis zur Anbindung der Dichtlippe am Tragkörper eine stetig zunehmende Steifigkeit. Die Haltbarkeit des Dichtrings, insbesondere in den Übergangsbereichen von den Dichtlippen in den Tragkörper, ist dadurch optimiert. Unerwünschte Relaxationen in diesem Bereich und somit eine unerwünschte Reduzierung der Vorspannung, mit der die Dichtkanten die abzudichtende Oberfläche anliegend berühren und / oder eine Beschädigung des Dichtrings in diesem Bereich, der einen Ausfall des Dichtrings zur Folge hätte, sind dadurch praktisch ausgeschlossen.
Durch den stetigen Verlauf der zunehmenden Dicken werden Kerbspannungen in den Dichtlippen, die zu einem Bruch der Dichtlippen führen könnten, vermieden.

Die Dichtkanten können im herstellungsbedingten Zustand des Dichtrings jeweils einen Dichtkantenradius r von höchstens 0,1 mm aufweisen. Ein solcher Dichtkantenradius wird üblicherweise als scharfkantig bezeichnet.

Eine solch scharfkantige Dichtkante kann durch einen Schneidvorgang hergestellt werden, der zum Beispiel in ein Extrusionsverfahren zur Herstellung des Dichtrings integriert ist.
Die Dichtlippenlängen der Dichtlippen sind durch einen Schneidvorgang variabel einstellbar.

Die Dichtlippen sind bevorzugt jeweils federlos ausgebildet. Durch die zuvor beschriebene spezielle Geometrie des im Wesentlichen Y-förmigen Dichtrings ist die Verwendung von Federn, die die Dichtlippen an die jeweils abzudichtende Oberfläche anpressen, unnötig. Der Dichtring ist dadurch besonders einfach ausgebildet und kostengünstig herstellbar.

Die Dichtlippen und der Tragkörper können einstückig ineinander übergehend und materialeinheitlich ausgebildet sein. Dadurch wird ebenfalls die einfache und kostengünstige Herstellbarkeit begünstigt. Für viele Anwendungsfälle ist ein einstückiger und materialeinheitlich ausgebildeter Dichtring gut geeignet.

Sollte es für den jeweiligen Anwendungsfall erforderlich sein, die Dichtlippen funktionstechnisch individualisiert auszuführen, kann der Dichtring als Mehrkomponentenbauteil ausgebildet sein. Die Dichtlippen können dann aus voneinander abweichenden Werkstoffen bestehen. Herstellbar ist ein solcher Dichtring zum Beispiel durch ein Mehrkomponenten-Spritzgießverfahren.

Die Dichtlippen können auf ihren einander axial zugewandten Seiten jeweils eine rillenförmige Oberflächenprofilierung aufweisen. Die Oberflächenprofilierungen können als Schmiermitteltaschen ausgebildet sein.

Eine solche Ausgestaltung begünstigt die Reduzierung von Reibmomenten und führt ebenfalls zu einer Verbesserung der Notlauf- und Trockenlaufeigenschaften. Innerhalb der Schmiermitteltaschen kann zum Beispiel das abzudichtende Medium angeordnet sein, also beispielsweise Öl.

Die Dichtlippen können während der bestimmungsgemäßen Verwendung des Dichtrings in axialer Richtung entgegengesetzt zueinander bogenförmig vorgewölbt ausgebildet sein. Dadurch wird erreicht, dass das Dichtsystem die doppelte Sicherheit, verglichen mit einer Einlippen-Lösung, hat. Die Doppellippen bieten darüber hinaus die Möglichkeit der Befüllung eines Schmiermitteldepots mit Fett.

Die Dichtlippen können während der bestimmungsgemäßen Verwendung des Dichtrings in axialer Richtung beiderseits ein Schmiermitteldepot begrenzen. Das Schmiermitteldepot kann beispielsweise mit einem Sperrfett befüllt sein, das einen Durchtritt von abzudichtendem Medium von einem der abzudichtenden Räume und den jeweils anderen abzudichtenden Raum verhindert.

Verwendet werden kann ein zuvor beschriebener Dichtring in Windkraftanlagen, wobei Dichtringe für solche Anwendungen häufig besonders große Durchmesser, zum Beispiel größer 400 mm, aufweisen. Dichtringe mit derart großen Durchmessern können - bei Verwendung eines PU-Werkstoffs - durch ein Extrusionsverfahren hergestellt werden, wobei die abgelängten Stränge im Bereich ihrer beiden Stirnseiten, wie zuvor bereits beschrieben, miteinander verschweißt werden.
Kleinere Durchmesser können mittels Spritzgussverfahren hergestellt werden.

### Kurzbeschreibung der Zeichnungen

Es zeigen
- Fig. 1: ein Ausführungsbeispiel eines erfindungsgemäßen Dichtrings in seinem herstellungsbedingten Zustand,
- Fig. 2: den Dichtring aus Fig. 1 während seiner bestimmungsgemäßen Verwendung.

### Ausführung der Erfindung

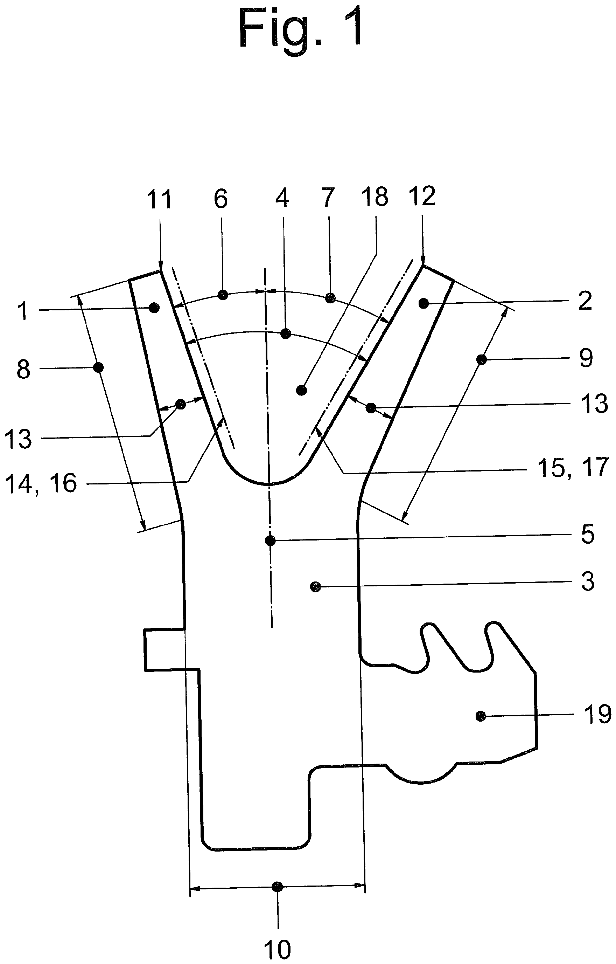

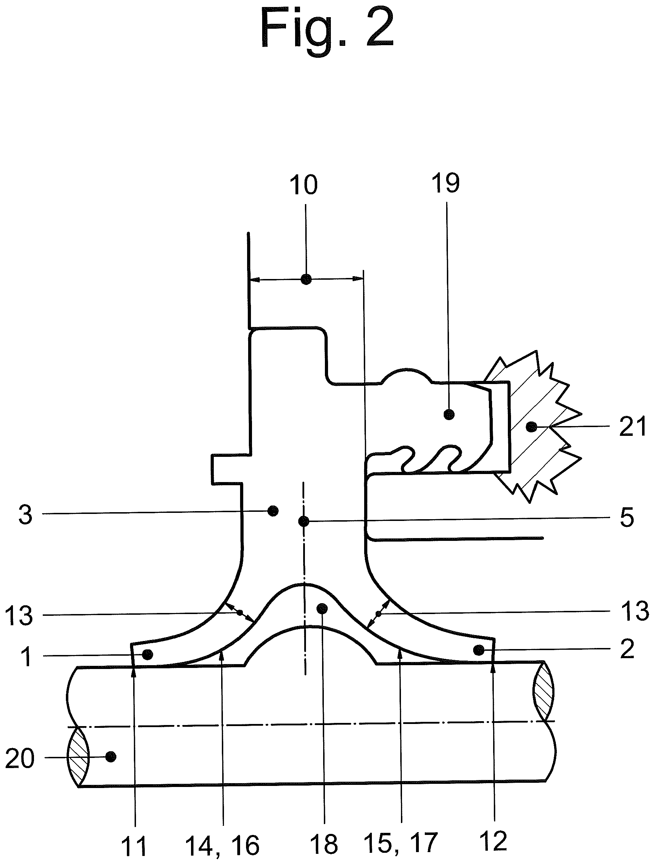

In den Figuren 1 und 2 ist ein Ausführungsbeispiel eines erfindungsgemäßen Dichtrings in schematischer Darstellung gezeigt.

Der gezeigte Dichtring ist - im Querschnitt betrachtet - im Wesentlichen Y-förmig ausgebildet. Ein solcher Dichtring gelangt zum Beispiel in Windkraftanlagen zur Anwendung, um Blattlager abzudichten. Alternativ kann er auch zur Abdichtung von Drehkränzen zur Anwendung gelangen. Durch den Dichtring werden bei derartigen Verwendungen Fette aus Großlagern abgedichtet.

Der Dichtring umfasst die erste 1 und die zweite dynamisch beanspruchte Dichtlippe 2, wobei die beiden Dichtlippen 1, 2 radial innenumfangsseitig des Dichtrings angeordnet sind.
Radial außenumfangsseitig des Dichtrings ist ein statisch beanspruchter Dichtbereich 19 angeordnet, der ebenfalls einstückig und materialeinheitlich mit dem Tragkörper 3 und deshalb in diesem Ausführungsbeispiel auch mit den beiden Dichtlippen 1, 2 ausgebildet ist.

In Fig. 1 ist der Dichtring in seinem herstellungsbedingten Zustand gezeigt. Die beiden dynamisch beanspruchten Dichtlippen 1, 2 schließen den ersten Winkel 4 ein, der etwa 40° beträgt.
Bezogen auf die gedachte Radialebene 5, die den Tragkörper 3 axial mittig durchschneidet, weisen die erste 1 und die zweite Dichtlippe 2 einen zweiten 6 und dritten Winkel 7 auf, die in dem hier gezeigten Ausführungsbeispiel 15° und 25° betragen.
Für manche Anwendungsfälle kann es vorteilhaft sein, wenn der zweite 6 und der dritte Winkel 7 voneinander abweichen. Derart unterschiedliche Winkel 6, 7 sind zum Beispiel dann sinnvoll, wenn die in der Regel zur äußeren Umgebung hin gerichtete erste Dichtlippe 1 zum Schutz gegen Verunreinigungen eine höhere Vorspannung zur Welle, dem abzudichtenden ersten Maschinenelement 20, haben soll, als die zum Inneren des Systems orientierte zweite Dichtlippe 2. So kann die zweite Dichtkante 12 durch ihre niedrigere Überdeckung während der bestimmungsgemäßen Verwendung des Dichtrings geringe Mengen des abzudichtenden Mediums passieren lassen, wobei das abzudichtende Medium dadurch eine Nachschmierung der ersten Dichtlippe 1 erlaubt.

Das Verhältnis der Dichtlippenlängen 8, 9 der Dichtlippen 1, 2 zur Breite 10 des Tragkörpers 3 beträgt im hier gezeigten Ausführungsbeispiel etwa 1,5.

Der Werkstoff, aus dem der Dichtring besteht, ist ein PU-Werkstoff, wobei in der PU-Matrix reibungsreduzierende Zuschlagsstoffe eingebettet sind. Der PU-Werkstoff weist eine Härte Shore A von 80 bis 95 auf.

Auf den einander axial zugewandten Innenseiten der Dichtlippen 1, 2 ist jeweils eine rillierte Oberflächenprofilierung 14, 15 vorgesehen, wobei die Oberflächenprofilierungen 14, 15 Schmiermitteltaschen 16, 17 bilden. Bei den Oberflächenprofilierungen 14, 15 handelt es sich jeweils um eine Mikrostrukturierung. Abzudichtendes Medium kann sich während der bestimmungsgemäßen Verwendung des Dichtrings in den Schmiermitteltaschen 16, 17 einlagern und für eine vorteilhafte Reduzierung der Reibmomente und für eine Verbesserung der Notlauf- und Trockenlaufeigenschaften sorgen.

In Fig. 2 ist der Dichtring aus Fig. 1 während seiner bestimmungsgemäßen Verwendung gezeigt. Die Dichtlippen 1, 2 sind in axialer Richtung entgegengesetzt zueinander bogenförmig vorgewölbt ausgebildet und bilden zusammen mit dem abzudichtenden ersten Maschinenelement 20 der Dichtungsanordnung das Schmiermitteldepot 18, das mit einem Sperrfett befüllt ist. Dadurch wird ein Eindringen von Verunreinigungen vermieden.
Das erste Maschinenelement 20 ist in diesem Ausführungsbeispiel als Welle ausgebildet.
Zur Dichtungsanordnung gehört nicht nur das abzudichtende erste Maschinenelement 20, sondern auch das abzudichtende zweite Maschinenelement 21, das durch ein Gehäuse gebildet ist, das die abzudichtende Welle umschließt. In dem zweiten abzudichtenden Maschinenelement 21 ist der Dichtring relativ ortsfest angeordnet und durch den statischen Dichtbereich 19 abgedichtet.

Die Dichtlippen 1, 2 weisen auf ihrer dem Tragkörper 3 abgewandten Seite jeweils ein freies Ende auf, wobei die freien Enden durch die Dichtkanten 11, 12 begrenzt sind. Die Dichtkanten 11, 12 berühren während der bestimmungsgemäßen Verwendung des Dichtrings die Oberfläche des abzudichtenden ersten Maschinenelements 20 dichtend.

Ausgehend von den Dichtkanten 11, 12 weisen die Dichtlippen 1, 2 eine in Richtung des Tragkörpers 3 stetig zunehmende Dicke 13 auf.

Durch die Geometrie des Dichtrings, insbesondere den ersten Winkel 4 zwischen den beiden Dichtlippen 1, 2 im herstellungsbedingten Zustand des Dichtrings, und den PU-Werkstoff, aus dem der Dichtring materialeinheitlich besteht, besteht die Möglichkeit, die Dichtlippen 1, 2 federlos auszubilden. Eine ausreichend große Anpressung der Dichtkanten 11, 12 an die abzudichtende Oberfläche des ersten Maschinenelements 20 wird alleine durch den Werkstoff des Dichtrings/der Dichtlippen 1, 2 selbst erzielt.

## Patentansprüche

1. Dichtring, der - im Querschnitt betrachtet - im Wesentlichen Y-förmig ausgebildet ist und eine erste (1) und eine zweite dynamisch beanspruchte Dichtlippe (2) umfasst, die an einem gemeinsamen Tragkörper (3) festgelegt sind, wobei die Dichtlippen (1, 2) im herstellungsbedingten Zustand des Dichtrings einen ersten Winkel (4) miteinander begrenzen, der höchstens 60° beträgt, **dadurch gekennzeichnet, dass** der Dichtring materialeinheitlich aus einem PU-Werkstoff besteht, umfassend eine PU-Matrix, in der reibungsreduzierende Zuschlagstoffe eingebettet sind.

2. Dichtring nach Anspruch 1, **dadurch gekennzeichnet, dass** die Zuschlagstoffe durch PTFE- und/oder UHMWPE- und/oder Graphit-Werkstoffe gebildet sind.

3. Dichtring nach einem der Ansprüche 1 oder 2, **dadurch gekennzeichnet, dass** der PU-Werkstoff eine Härte Shore A von 80 bis 95 aufweist.

4. Dichtring nach einem der Ansprüche 1 bis 3, **dadurch gekennzeichnet, dass** der erste Winkel (4) höchstens 45° beträgt.

5. Dichtring nach einem der Ansprüche 1 bis 4, **dadurch gekennzeichnet, dass** der Tragkörper (3) axial mittig eine gedachte Radialebene (5) aufweist und dass die erste (1) und die zweite Dichtlippe (2) mit der Radialebene (5) einen zweiten (6) und dritten Winkel (7) begrenzen, die jeweils höchstens 45° betragen.

6. Dichtring nach Anspruch 5, **dadurch gekennzeichnet, dass** der zweite (6) und dritte Winkel (7) jeweils höchstens 25° betragen.

7. Dichtring nach einem der Ansprüche 1 bis 6, **dadurch gekennzeichnet, dass** die Dichtlippen (1, 2) jeweils eine Dichtlippenlänge (8, 9) aufweisen, dass der Tragkörper (3) eine axiale Breite (10) aufweist und dass das Verhältnis der jeweiligen Dichtlippenlänge (8, 9) zur Breite (10) 1,25 bis 2 beträgt.

8. Dichtring nach einem der Ansprüche 1 bis 7, **dadurch gekennzeichnet, dass** die Dichtlippen (1, 2) jeweils eine Dichtkante (11, 12) aufweisen und von ihrer jeweiligen Dichtkante (11, 12) zum Tragkörper (3) eine stetig zunehmende Dicke (13) aufweisen.

9. Dichtring nach Anspruch 8, **dadurch gekennzeichnet, dass** die Dichtkanten (11, 12) im herstellungsbedingten Zustand des Dichtrings jeweils einen Dichtkantenradius r von höchstens 0,1 mm aufweisen.

10. Dichtring nach einem der Ansprüche 1 bis 9, **dadurch gekennzeichnet, dass** die Dichtlippen (1, 2) jeweils federlos ausgebildet sind.

11. Dichtring nach einem der Ansprüche 1 bis 10, **dadurch gekennzeichnet, dass** die Dichtlippen (1, 2) und der Tragkörper (3) einstückig ineinander übergehend und materialeinheitlich ausgebildet sind.

12. Dichtring nach einem der Ansprüche 1 bis 11 , **dadurch gekennzeichnet, dass** die Dichtlippen (1, 2) auf ihren einander axial zugewandten Seiten jeweils eine rillenförmige Oberflächenprofilierung (14, 15) aufweisen.

13. Dichtring nach Anspruch 12, **dadurch gekennzeichnet, dass** die Oberflächenprofilierungen (14, 15) als Schmiermitteltaschen (16, 17) ausgebildet sind.

14. Dichtring nach einem der Ansprüche 1 bis 13, **dadurch gekennzeichnet, dass** die Dichtlippen (1, 2) während der bestimmungsgemäßen Verwendung des Dichtrings in axialer Richtung entgegengesetzt zueinander bogenförmig vorgewölbt ausgebildet sind.

15. Dichtring nach einem der Ansprüche 1 bis 14, **dadurch gekennzeichnet, dass** die Dichtlippen (1, 2) während der bestimmungsgemäßen Verwendung des Dichtrings in axialer Richtung beiderseits ein Schmiermitteldepot (18) begrenzen.

16. Dichtring nach einem der Ansprüche 1 bis 15, **dadurch gekennzeichnet, dass** die Dichtlippenlängen (8, 9) durch einen Schneidvorgang variabel einstellbar sind.

## Claims

1. Sealing ring which - as seen in cross section - is of essentially Y-shaped design and comprises a first sealing lip (1) and a second, dynamically stressed sealing lip (2), the two sealing lips being secured on a common carrying body (3), wherein the sealing lips (1, 2), in the production state of the sealing ring, bound a first angle (4), of not more than 60°, with one another, **characterized in that** the sealing ring consists solely of a PU material, comprising a PU matrix in which friction-reducing additives are embedded.

2. Sealing ring according to Claim 1, **characterized in that** the additives are formed by PTFE and/or UHMWPE and/or graphite materials.

3. Sealing ring according to either of Claims 1 and 2, **characterized in that** the PU material has a Shore hardness A of 80 to 95.

4. Sealing ring according to one of Claims 1 to 3, **characterized in that** the first angle (4) is not more than 45°.

5. Sealing ring according to one of Claims 1 to 4, **characterized in that** the carrying body (3) has an imaginary radial plane (5) axially along its centre, and **in that** the first sealing lip (1) and the second sealing lip (2) bound a second angle (6) and a third angle (7), which are each not more than 45°, with the radial plane (5) .

6. Sealing ring according to Claim 5, **characterized in that** the second angle (6) and third angle (7) are each not more than 25°.

7. Sealing ring according to one of Claims 1 to 6, **characterized in that** the sealing lips (1, 2) each have a sealing-lip length (8, 9), **in that** the carrying body (3) has an axial width (10), and **in that** the ratio of the respective sealing-lip length (8, 9) to the width (10) is 1.25 to 2.

8. Sealing ring according to one of Claims 1 to 7, **characterized in that** the sealing lips (1, 2) each have a sealing edge (11, 12) and have a constantly increasing thickness (13) from their respective sealing edge (11, 12) to the carrying body (3).

9. Sealing ring according to Claim 8, **characterized in that** the sealing edges (11, 12), in the production state of the sealing ring, each have a sealing-edge radius r of not more than 0.1 mm.

10. Sealing ring according to one of Claims 1 to 9, **characterized in that** the sealing lips (1, 2) are each of spring-free design.

11. Sealing ring according to one of Claims 1 to 10, **characterized in that** the sealing lips (1, 2) and the carrying body (3) are formed from a single material such that they merge one into the other in one piece.

12. Sealing ring according to one of Claims 1 to 11, **characterized in that** the sealing lips (1, 2) each have a groove-like surface profiling (14, 15) on their sides which are directed axially towards one another.

13. Sealing ring according to Claim 12, **characterized in that** the surface profilings (14, 15) are designed in the form of lubricant pockets (16, 17).

14. Sealing ring according to one of Claims 1 to 13, **characterized in that** the sealing lips (1, 2), during intended use of the sealing ring, are designed to curve forwards in arcuate fashion in opposite directions to one another, as seen in the axial direction.

15. Sealing ring according to one of Claims 1 to 14, **characterized in that** the sealing lips (1, 2), during intended use of the sealing ring, bound a lubricant reservoir (18) on either side, as seen in the axial direction.

16. Sealing ring according to one of Claims 1 to 15, **characterized in that** the sealing-lip lengths (8, 9) can be adjusted in a variable manner by a cutting operation.

## Revendications

1. Bague d'étanchéité, réalisée essentiellement en forme de Y, vu en section transversale, et qui comprend une première (1) et une deuxième (2) lèvre d'étanchéité sollicitée dynamiquement, qui sont fixées sur un corps de support commun (3), les lèvres d'étanchéité (1, 2), dans l'état de fabrication de la bague d'étanchéité, délimitant entre elles un premier angle (4) qui vaut au maximum 60°, **caractérisée en ce que** la bague d'étanchéité se compose dans un matériau unitaire en un matériau à base de PU, comprenant une matrice de PU, dans laquelle sont incorporés des additifs réduisant les frottements.

2. Bague d'étanchéité selon la revendication 1, **caractérisée en ce que** les additifs sont formés par des matériaux à base de PTFE et/ou de UHMWPE et/ou de graphite.

3. Bague d'étanchéité selon l'une quelconque des revendications 1 ou 2, **caractérisée en ce que** le matériau à base de PU présente une dureté Shore A de 80 à 95.

4. Bague d'étanchéité selon l'une quelconque des revendications 1 à 3, **caractérisée en ce que** le premier angle (4) vaut au maximum 45°.

5. Bague d'étanchéité selon l'une quelconque des revendications 1 à 4, **caractérisée en ce que** le corps de support (3) présente axialement au centre un plan radial imaginaire (5) et **en ce que** la première (1) et la deuxième (2) lèvre d'étanchéité délimitent avec le plan radial (5) un deuxième (6) et un troisième (7) angle qui valent à chaque fois 45° au maximum.

6. Bague d'étanchéité selon la revendication 5, **caractérisée en ce que** le deuxième (6) et le troisième (7) angle valent à chaque fois 25° au maximum.

7. Bague d'étanchéité selon l'une quelconque des revendications 1 à 6, **caractérisée en ce que** les lèvres d'étanchéité (1, 2) présentent à chaque fois une longueur de lèvre d'étanchéité (8, 9), **en ce que** le corps de support (3) présente une largeur axiale (10) et **en ce que** le rapport de la longueur respective des bagues d'étanchéité (8, 9) à la largeur (10) est de 1,25 à 2.

8. Bague d'étanchéité selon l'une quelconque des revendications 1 à 7, **caractérisée en ce que** les lèvres d'étanchéité (1, 2) présentent à chaque fois une arête d'étanchéité (11, 12) et présentent une épaisseur (13) croissant en continu depuis leur arête d'étanchéité respective (11, 12) vers le corps de support (3).

9. Bague d'étanchéité selon la revendication 8, **caractérisée en ce que** les arêtes d'étanchéité (11, 12), dans l'état de fabrication de la bague d'étanchéité, présentent à chaque fois un rayon d'arête d'étanchéité r de 0,1 mm au maximum.

10. Bague d'étanchéité selon l'une quelconque des revendications 1 à 9, **caractérisée en ce que** les lèvres d'étanchéité (1, 2) sont à chaque fois réalisées sans ressort.

11. Bague d'étanchéité selon l'une quelconque des revendications 1 à 10, **caractérisée en ce que** les lèvres d'étanchéité (1, 2) et le corps de support (3) se prolongent d'une seule pièce l'un dans l'autre et sont réalisés dans le même matériau.

12. Bague d'étanchéité selon l'une quelconque des revendications 1 à 11, **caractérisée en ce que** les lèvres d'étanchéité (1, 2) présentent, sur leurs côtés tournés axialement l'un vers l'autre, à chaque fois un profilage de surface rainuré (14, 15) .

13. Bague d'étanchéité selon la revendication 12, **caractérisée en ce que** les profilages de surface (14, 15) sont réalisés sous forme de cavités de lubrifiant (16, 17).

14. Bague d'étanchéité selon l'une quelconque des revendications 1 à 13, **caractérisée en ce que** les lèvres d'étanchéité (1, 2) sont réalisées sous forme précintrée en forme d'arc à l'opposé l'une de l'autre dans la direction axiale pendant l'utilisation conforme de la bague d'étanchéité.

15. Bague d'étanchéité selon l'une quelconque des revendications 1 à 14, **caractérisée en ce que** les lèvres d'étanchéité (1, 2) délimitent un dépôt de lubrifiant (18) des deux côtés dans la direction axiale pendant l'utilisation conforme de la bague d'étanchéité.

16. Bague d'étanchéité selon l'une quelconque des revendications 1 à 15, **caractérisée en ce que** les longueurs des lèvres d'étanchéité (8, 9) peuvent être ajustées de manière variable par une opération de coupe.
